# EUROPEAN PATENT APPLICATION

(11) **EP 2 003 726 A1**
(43) Date of publication of application: **17.12.2008**
(21) Application number: 08157974.0
(22) Date of filing: 10.06.2008
(51) Int. Cl.: H01M 16/00, H01G 9/155, H01G 9/28, H01M 8/24, H01M 14/00, H01M 8/04, H01M 8/00

(54) **Power source with capacitor**

(30) Priority: 11.06.2007 US 761290
(71) Applicant: Honeywell International Inc., Morristown NJ 07960 (US)
(72) Inventor: Eickhoff, Steven J., Morristown, NJ 07962-2245 (US); Padmanabhan, Aravind, Morristown, NJ 07962-2245 (US); Marcus, Matthew S., Morristown, NJ 07962-2245 (US)
(74) Representative: Buckley, Guy Julian

(57) **Abstract**

A power generator includes a hydrogen producing fuel (220) and a fuel cell stack layer (230) that includes a proton exchange membrane. An anode layer (235) and a cathode layer (240) are disposed on opposite surfaces of the fuel cell stack (230). A super-capacitor layer (243) is integrated with the other layers and electrically coupled to the anode layer (235) and the cathode layer (240).

## Description

### Related Applications

This application is a continuation-in-part of U.S. Patent Application Serial No. 11/796,012, filed April 26, 2007, which is incorporated herein by reference.

### Background

In some fuel cell based power generators, hydrogen is extracted from a fuel in the presence of water and then is introduced into a fuel cell to produce electricity. Power generators based on hydrogen generators and proton exchange membrane (PEM) fuel cells may provide higher energy density than conventional power sources like batteries, but may have difficulty in quickly providing pulses of current. They may also be prone to high self discharge and slow startup. Further, high cost of manufacture may have prevented wide commercialization.

Many electronic devices have intermittent and widely varying power requirements from essentially zero to quickly using short pulses of power as high as a few Watts. These power requirements make it difficult to design a commercially feasible fuel cell for a wide variety of applications.

### Brief Description of the Drawings

FIG. 1 is an equivalent circuit diagram of a fuel cell having an integrated capacitor according to an example embodiment.

FIG. 2 is a cross section representation of a fuel cell based power generator having a capacitor according to an example embodiment.

FIG. 3 is a cross section of a portion of the power generator of FIG. 1 illustrating a slide valve, capacitor and fuel cell stack according to an example embodiment.

FIG. 4 is a cross section of a portion of the power generator cross section of FIG. 3 illustrating the capacitor in further detail according to an example embodiment.

FIG. 5 is a schematic of an array of capacitors for selectively coupling additional power according to an example embodiment.

FIG. 6 is a block diagram of an example switch in the fuel cell for coupling the capacitors of FIG. 5.

### Detailed Description

In the following description, reference is made to the accompanying drawings that form a part hereof, and in which is shown by way of illustration specific embodiments which may be practiced. These embodiments are described in sufficient detail to enable those skilled in the art to practice the invention, and it is to be understood that other embodiments may be utilized and that structural, logical and electrical changes may be made without departing from the scope of the claims. The following description is, therefore, not to be taken in a limited sense, and the scope of the present invention is defined by the appended claims.

An electrical power generator is provided which generates hydrogen gas internally through the reaction of water vapor with a moisture absorbing, solid fuel substance. The hydrogen gas is provided and reacted with oxygen at a fuel cell to generate electrical energy. A capacitor may be monolithically integrated with a fuel cell stack to provide immediate power and pulses of current The capacitor may be charged during low load conditions and discharged when the load requires more current. The electrical energy generated may be used to power large or small devices that are connected to the power generator, depending on the size of the power generator. The power generator of the invention is particularly useful for powering miniature devices such as wireless sensors, cellular phones or other hand held electronic devices that are electrically connected to the anode and cathode of the one or more fuel cells of the power generator. The use of a capacitor allows a reduction in fuel cell proton exchange membrane (PEM) area, which may reduce the need for expensive metals, and lower self discharge.

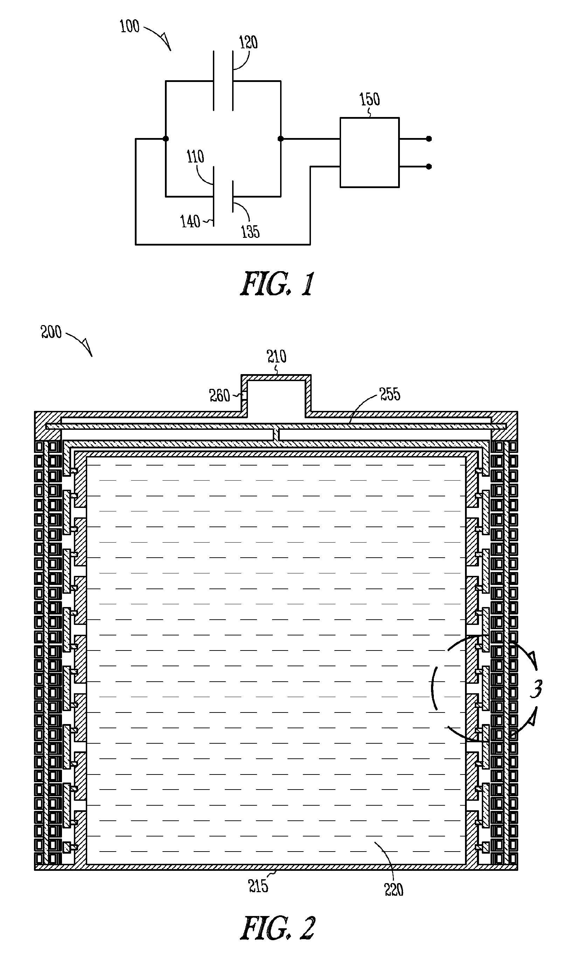

FIG. 1 illustrates an equivalent circuit diagram 100 for a fuel cell 110 having an integrated capacitor 120. Fuel cell 110 has an anode indicated at 135 and a cathode at 140. The elements are electrically coupled in parallel in one embodiment, such that the fuel cell charges the capacitor at least when current is not been drawn, and both may provide power when current is being drawn. If very little power is being drawn, the fuel cell may charge the capacitor if needed. In various embodiments, many different fuel cells and capacitors may be used. Some embodiments, utilize a hydrogen based fuel cell, and an integrated super capacitor or ultra capacitor, such as a nano-capacitor having nano-scale features as described more fully below. Such a capacitor generally stores far more charge than regular capacitors.

In a further embodiment, a power conditioning circuit 150 is coupled to the fuel cell 110 and capacitor 120. Power conditioning circuit 150 conditions an output to be consistent with that required by a load. The power conditioning circuit 150 may be integrated with the fuel cell 110 and capacitor 120, or may be an add on device in various embodiments. In still further embodiments, the power conditioning circuit 150 may be a part of the load and separate from the fuel cell 110 and capacitor 120.

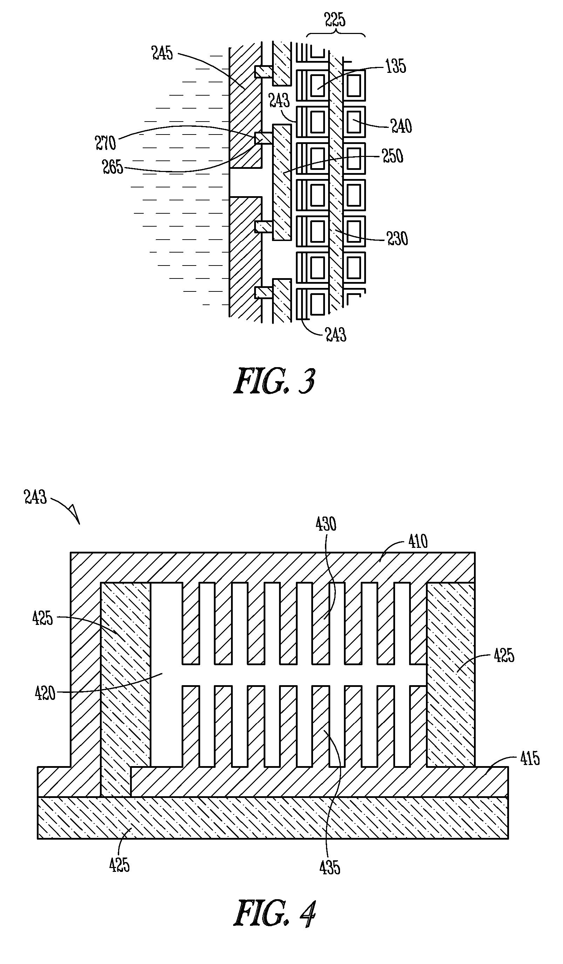

FIG. 2 is a cross section representation of a fuel cell based power generator 200 according to an example embodiment. Generator 200 includes a cathode output electrode 210 and an anode output electrode 215. The cathode output electrode may be shaped like a protrusion from the generator 200, like the cathode of a common battery. It is commonly referred to as a pip. In one embodiment, the generator may be shaped similar to a commercially available dry cell battery, such that it can be substituted for the dry cell battery. A fuel chamber 220 may contain a hydrogen containing fuel that provides hydrogen to a fuel cell layer 225, which is shown in expanded form in FIG. 3, wherein the numbering is consistent with FIG. 2. The fuel may be liquid or solid in various embodiments.

Fuel cell layer 225 may include a proton exchange membrane (PEM), catalyst layer, gas diffusion layer, and micro porous layer, all indicated at a fuel cell stack layer 230. Fuel cell layer 225 in one embodiment further comprises an anode electrode layer 235 that is coupled to the fuel cell layer 225 between the fuel cell layer 225 and the fuel chamber 220. It is also coupled to the anode output electrode 215. A cathode electrode layer 240 is coupled to and a part of the other side of the fuel cell layer 225, and is coupled to the cathode output electrode 210. It may also be exposed to ambient conditions.

Fuel cell stack layer 230 in one embodiment may include a proton exchange membrane (PEM) or other type of membrane that combines hydrogen and oxygen to produce water and electricity such as GDLs or MPLs. The anode electrode may be electrically coupled to and part of the fuel cell stack layer 230. A cathode electrode may be electrically coupled to and part of the other side of the fuel cell stack layer 230.

A typical PEM fuel cell comprises an electrolytic membrane positioned between a positive electrode, or cathode, on one side of the membrane, and a negative electrode, or anode, on the other side of the membrane. In typical hydrogen-oxygen PEM fuel cell behavior, a hydrogen fuel (e.g. hydrogen gas) is channeled through flow field plates to the anode, while oxygen is channeled to the cathode of the fuel cell. At the anode, the hydrogen is split into positive hydrogen ions (protons) and negatively charged electrons. The electrolytic membrane allows only the positively charged ions to pass through it to the cathode. The negatively charged electrons must instead travel along an external circuit to the cathode, creating an electrical current. At the cathode, the electrons and positively charged hydrogen ions combine with oxygen to form water molecules.

In one embodiment, the fuel cell layer 225 further includes a capacitor layer 243. The capacitor layer 243 in one embodiment is monolithically integrated with the fuel cell layer 225 and formed adjacent the anode electrode layer 235. There may be aligned openings in the anode electrode layer 235 and capacitor layer 243 to allow hydrogen to pass to the fuel cell layer 225 and water vapor to pass to the fuel chamber 220. In further embodiments, the capacitor layer 243 may be formed adjacent other layers of the fuel cell layer 225, such as adjacent the cathode layer 240.

The fuel cell stack need not extend along the entire length of the power generator 200. This is due in part to the ability of the capacitor to provide current quickly when a load is placed across the power generator 200. The length of the fuel cell layer 225 may be determined in accordance with desired specifications for maximum steady state current. If less than the length of the power generator 200, there may be concurrent reductions in self discharge, and a reduction in the overall area of expensive platinum containing membranes.

In one embodiment, the fuel layer 225 components, such as electrodes, gas diffusion layers, membrane and the capacitor components are formed from one or more thin layers that may be assembled in a roll to roll process, forming a thin, high surface area sheet that can be wrapped around the perimeter of the power generator 200.

Between the fuel cell layer 225 and the hydrogen chamber 220 is a slide valve. The slide valve includes a fixed plate 245 and a movable plate 250 that are coupled in a sliding relationship in one embodiment. A hydrogen and water vapor permeable particulate filter may also be used between the fuel cell and the fuel or fuel chamber 220. In one embodiment, the fixed plate 245 is supported in fixed position proximate or adjacent to the fuel chamber 220, and the movable plate 250 is coupled to a flexible diaphragm 255, that flexes in response to changes in pressure between the hydrogen pressure in the fuel chamber and ambient pressure. A hole 260 provides the diaphragm access to atmospheric pressure. The diaphragm 255 acts as a pressure responsive actuator that controls the slide valve. Each of the fixed plate 245 and movable plate 250 has openings that prevent flow when in a closed position and allow flow when the openings at least partially line up.

In one embodiment the valve responds to a pressure differential between ambient and the inside of the power generator. The fuel cell layer 225 is exposed at a desired pressure differential between hydrogen in the fuel container 220 and ambient.

In one embodiment the power generator is cylindrical in shape and the valve plates are concentric cylinders having mating holes. Fixed plate 245 and movable plate 250 correspond to an inner cylinder and an outer cylinder respectively. When a pressure differential exists across the membrane 255 such as when hydrogen pressure is greater than ambient pressure, the membrane 255 deflects and moves the outer cylinder 250 axially relative to the inner cylinder. The movement of the outer cylinder relative to the inner cylinder causes the holes to become misaligned, which closes the valve.

In one embodiment, o-rings 265 may be used between the plates or cylinders to provide sealing when the holes are misaligned. In one embodiment, the o-rings 265 are disposed within annular grooves 270 on the inner cylinder or fixed plate 245. The o-rings 265 seal against the inside of the outer cylinder or movable plate 250 to seal the cylinders when the holes are misaligned, corresponding to the valve being closed. This provides a substantially sealed closed valve position. When substantially sealed, the conductance of the valve is approximately 1% or less than the fully open conductance.

In one embodiment, the o-rings 265 may be formed of a compressible material and may reside substantially within the annular grooves 270. The compressibility of the material may minimize the effects of variations in size of the plates occurring during normal manufacturing. Nitrile, fluoroelastomers, Ethylene-Propylene, Copolymer of tetrafluoroethylene and propylene, FEP, PFA. O-ring cross section can be circular or rectangular. Wear rings or glide rings may also be used.

The plates in one embodiment are as thin as possible to maintain high conductance, while maintaining sufficient structural rigidity to move without collapse. Thicker sections on the perimeter of the outer plate running parallel to the direction of movement of the valve may be used to improve structural rigidity while maintaining high conductance. Likewise for the inner plate, where thicker sections may be on the inner diameter. O-rings may also have a small cross section in one embodiment to achieve high conductance, while maintaining a good seal between plates.

Other shaped plates may also be used, and may generally conform to the shape of the fuel container and fuel cell. The valve plates may alternatively form a low friction contact fit in one embodiment. An o-ring need not be used in this embodiment. A lubricant may be used to reduce stiction between the plates. The outer dimensions, such as diameter of the fixed plate is very close to the dimensions of the inner dimensions of the moveable plate to form the friction fit.

Material combinations should have low coefficient of friction, for example stainless steel for the outer electrode and Teflon filled acetal for the inner electrode. Many other combinations that provide similar characteristics may be used.

In another embodiment, the outer plate could have a cut in the side, with an inside diameter slightly smaller than the outer diameter of the inner plate, such that the outer plate is expanded slightly when placed over the inner plate, and maintains a sealing force against the inner plate (or o-rings). Additionally, the outer plate could be flexible (rubber) and the inner plate rigid (stainless steel) and as discussed above, the inner diameter of the outer plate could be slightly smaller than the outer diameter of the inner plate, creating a sealing force as the outer plate expands to accommodate the inner plate.

The lubricant may also operate as a sealant. In one embodiment, the lubricant may be graphite or silicon or other lubricant compatible with materials used and the electrochemical reactions occurring. Oil or other hydrocarbon lubricants may also be used.

One example embodiment of a portion of capacitor layer 243 is shown in further detail in FIG. 4. In one embodiment, a super capacitor is used. Typically, super-capacitors are electrolytic capacitors that include a high surface area electrode immersed in a liquid electrolyte. Both the high surface area of the electrode and the short distance of the double-layer of the electrolyte provide a large capacitance. In the portion of capacitor layer 243 in FIG. 4, a pair of electrodes 410 and 415 are separated by an electrolyte 420. Insulators 425 are also provided at desired areas to isolate the electrodes from each other and from electrodes associated with the fuel cell layer 225 and anode layer 235. Nano scale materials, such as nanowires 430 and 435 extend from each of the electrodes 410 and 415 to increase the surface area, and hence the capacitance of capacitor 240. They are separated from each other by the electrolyte.

In one embodiment, a nanowire has a width dimension on the order of 10⁻⁹ - 10⁻⁷ meters or one-one hundred nanometers. A variety of nanowires exist or may exist in the future, such as metallic, carbon nanotubes, conductive polymers, semi-conducting and insulating. Nanowires are artificial materials and may be created by suspension, deposition or synthesizing from the materials from which they are made. The intrinsically large surface-to-volume ratio that nanowires possess provides a performance enhancement where a very large capacitance may be achieved in a small package. Essentially, a small amount of nanowires on an electrode provides an enormous amount of surface area which yields a large capacitance. Additionally, the vertically aligned wires create an ordered pore structure that can allow better electrolyte-electrode coverage and ion transport compared to state of the art super-capacitor technology.

The metal wires may be synthesized by simply electroplating through a porous template, such that the pattern of the porous structure will transfer to the nanowire electrode. In one embodiment, a metal layer is deposited on the back side of a template. The metal layer may be deposited by electroplating it in one embodiment, through the pores of the membrane, followed by removal of the template by dissolving the template, leaving an electrode plate and wire structure, such as that shown in FIG. 4.

The template that has been dissolved after the wires have been electrodeposited leaves a well ordered nanowire electrode structure. The entire nanowire electrode can then be immersed in an electrolyte solution, forming a nanowire super-capacitor. In some embodiments, templates may be formed from alumina or silica. One available template is an alumina membrane that is manufactured by Whatman Inc., which has an office in Florham Park, New Jersey, that produces this alumina membrane under the trade name Anopore^{®}. The material has a precise, non-deformable honeycomb pore structure with no lateral crossover between individual pores, so that when the pores are filled, a large plurality of individual wires are formed as nanowires.

One example electrolyte contains an organic solvent and a salt.. Salts that are examples of electrolyte materials include but are not limited to triethylmethylammonium tetrafluoroborate salt and tetraethylammonium tetrafluoroborate salt, each of which may be dissolved in an organic solvent. These salts may also be combined with the ionic liquid. The electrolyte may be in an aqueous form in some embodiments.

In one example method of manufacturing a supercapacitor electrode may be prepared by the following steps:
1. Sputter coat back of a commercial alumina (Whatman Anopore) membrane with metal (gold);
2. Coat back of membrane with adhesive conductive tape (copper)
3. Electroplate metal (nickel) through commercial membrane;
4. Place membrane in 6M NaOH to initiate membrane removal. Slight agitation can assist membrane removal.
5. Vortex membrane for ~1min.

The resulting structure may have a large plurality of nickel nanowires with ~300nm diameter. These nanowire electrodes may be integrated into electrolytic capacitors using 0.1M NaCl as the electrolyte. The use of such example nanowires may offer a factor of 100x enhancement at low frequency operation compared to a controlled planar electrode. Larger enhancements in the capacitance are possible through optimizations of the nanowire geometry. The nanowire materials may be other highly conductive materials such as gold or silver. In addition to aqueous electrolytes, salts may be used with organic solvents as well as ionic liquids.

Commercially interesting devices that use monolithically integrated super-capacitors may use large area porous templates, such as sheets of anodized alumina, and salts in organic solvents as electrolyte materials.

The nanowires may provide a large surface to volume ratio allowing large capacitance using a small amount of material. Vertically aligned nanowires allow higher power density compared to carbon-based technology due to easy ion transport and should increase the amount of electrode in direct contact with an electrolyte. The process is process-lab compatible allowing easy integration into MEMS/chip-scale sensors, and it is intended that the super capacitor electrodes of this invention will be used in a variety of micro-chip applications where super capacitors perform functions as desired.

The fuel cell components (electrodes, gas diffusion layers, and membrane) and capacitor components may consist of a number of thin layers that may be assembled in a roll-to-roll process, forming a thin, high surface area sheet that can be wrapped around a perimeter of the power generator 200. Solution based synthesis methods may also allow the capacitor component of the power generator to be fabricated using roll-to-roll methods without the need for vacuum or high temperature systems.

The capacitor plates may be formed by integrating nanoscale materials, such as nanowires, onto flexible conducting electrodes. Integration of the nanomaterial may be performed by solution based methods, such as electroplating through anodized alumina. The nanomaterials may provide an extraordinarily high surface area on the electrode plate yielding a super-capacitor plate. Sandwiching a layer of electrolytic material between two super-capacitor plates completes the construction of an electrolytic super-capacitor.

In one embodiment, the capacitor layer 243 comprises an array of small capacitors that can be charged individually, and allow the power generator to output full voltage immediately, while allowing full charge to build up over time. This provides the ability to deliver a power profile that is demanded by the load. The capacitors may be coupled in parallel, or some may also be serially coupled to obtain a desired voltage. In still further embodiments, power conditioning circuitry may be integrated with the power generator and condition electrical power generated by the power generator to meet the demands of expected loads, such as voltage and current requirements.

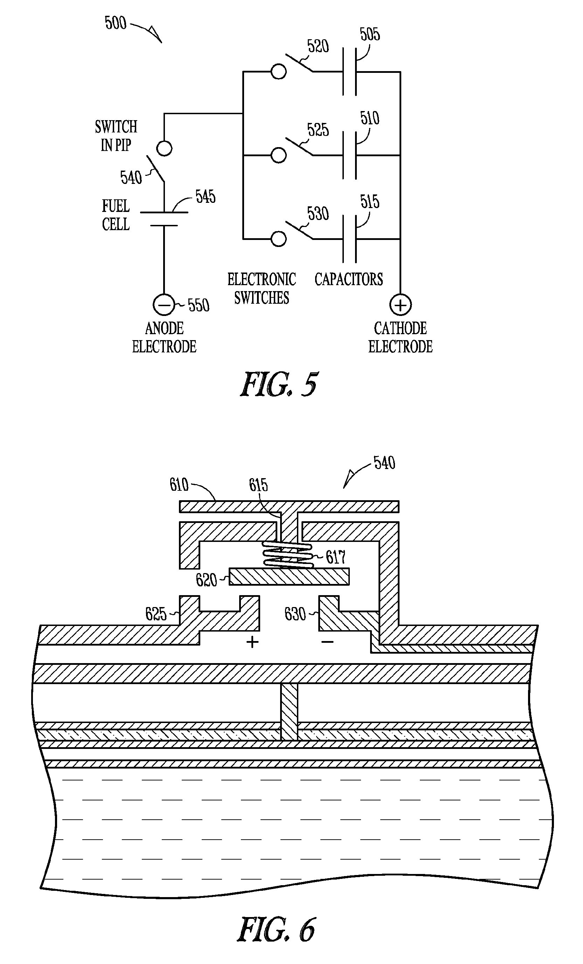

FIG. 5 illustrates an example array of such capacitors generally at 500. Three capacitors 505, 510 and 515 in a parallel arrangement are illustrated. Each capacitor may be coupled to an electronic switch 520, 525 and 530 respectively, forming a programmable capacitor bank. The electronic switches may be controlled by a programmable logic component/chip. The switches can be opened and closed to selectively charge specific capacitors - effectively tuning the device capacitance, and how much charge is available to power a load. While only 3 capacitors are show, the array can be made up of many capacitors. In further embodiments, the capacitors may be coupled in series by use of the electronic switch or switches.

The programmable capacitor bank may be coupled to a switch in pip 540 coupled to a fuel cell 545 and fuel cell anode electrode at 550. Switch in pip 540 is closed in one embodiment when power source is inserted into a device, electrically connecting the fuel cell and capacitor. This may reduce self discharge (in the capacitor) when the power source is not in use.

FIG. 6 is a block diagram representation of switch in pip 540 in further detail formed within the cathode electrode 210 of the fuel cell of FIG. 2. A switch plate 610 is supported by a rod 615 and spring arrangement 617 inside the cathode electrode 210. The switch in pip 540 also includes a contact plate 620 coupled to the rod 615 for contacting a lead to the cathode electrode at 625 and a capacitor lead 630 to selectively couple the cathode to the capacitor bank 505, 510, 515.

The combination of PEM based fuel cell along with an integrated super capacitor facilitates the formation of power generator systems having a form factor compatible or identical to existing or future electronics batteries, such as AA, AAA, C, D, 9V, various other electronics batteries used in cameras and sensors and others. Such a combination provides much greater energy density in the same form factor size. In one embodiment, at least approximately 10 types the energy of existing dry cell batteries in such form factors may be provided. The use of the integrated super capacitor allows a reduction in the size of the PEM area that may normally be required to produce current levels commensurate with dry cell battery form factors. This reduction in size in combination with the integrated super capacitor facilitates the provision of power profiles demanded by a variety of loads.

The Abstract is provided to comply with 37 C.F.R. §1.72(b) to allow the reader to quickly ascertain the nature and gist of the technical disclosure. The Abstract is submitted with the understanding that it will not be used to interpret or limit the scope or meaning of the claims.

## Claims

1. A system comprising:
a hydrogen containing fuel (220);
a fuel cell stack layer (230) that includes a proton exchange membrane;
an anode layer (235) and a cathode layer (240) disposed on opposite surfaces of the fuel cell stack (230); and
a super capacitor layer (243) integrated with the other layers and electrically coupled to the anode layer (235) and the cathode layer (240).

2. The system of claim 1 wherein the layers are monolithically integrated with each other (230).

3. The system of claim 2 wherein the layers are formed to facilitate a roll-to-roll manufacturing process.

4. The system of claim 1 wherein the super capacitor layer (243) comprises a pair of capacitor plates (410, 415) including nanowires (430, 435) that provide a large surface area.

5. The system of claim 4 and further including a layer of electrolytic material (420) sandwiched between the pair of capacitor plates (410, 415), wherein the electrolytic material (240) comprises a salt in an organic solvent.

6. An energy generator (200) comprising:
a hydrogen based fuel cell (110) having fuel cell layer (225) with a proton exchange membrane; and
a super capacitor (243) integrated with the fuel cell layer (225).

7. The energy generator (200) of claim 6 wherein the fuel cell (110) and integrated super capacitor (243) are disposed within a container (215) having a shape approximately the same as a small battery.

8. The energy generator (200) of claim 7 wherein the shape is selected from the group consisting of the shape of a AA, AAA, C, D, or 9V battery.

9. A method comprising:
providing power from a proton exchange membrane based fuel cell stack layer (230); and
providing power from a super capacitor layer (243) monolithically integrated with the fuel cell stack layer (230) that is electrically coupled in parallel with the fuel cell stack layer (230).

10. The method of claim 9 and further comprising charging the super capacitor layer from the fuel cell stack layer (230) under low load conditions and discharging the super capacitor layer (243) under high load conditions.
